# EUROPEAN PATENT APPLICATION

(11) **EP 0 773 094 A1**
(43) Date of publication of application: **14.05.1997**
(21) Application number: 95118061.1
(22) Date of filing: 16.11.1995
(51) Int. Cl.: B29C 43/22, B29C 55/14, C08L 23/12

(54) **Synthetic paper and method for its manufacture**

(71) Applicant: NAN YA PLASTICS CORPORATION, Taipei (TW)
(72) Inventor: Huang, H.W., Taipei (TW)
(74) Representative: Grünecker, Kinkeldey, Stockmair & Schwanhäusser Anwaltssozietät

(57) **Abstract**

This invention relates to a method of manufacturing composite paper, especially by using composite paper manufacture system of bi-axial drawing type of single-axial drawing type consisting of mixer (1), kneader (2), feeder (3), extruder (4), mixing rolls (5), calender body (6), guiding rolls (7), embossing device (8), longitudinal drawing device (9), and lateral drawing device (10) (or longitudinal drawing device only for single-axial drawing type), drawn-tempering device (11), cooling rolls (12), surface treatment device (13) and winder (14). The method comprises, first mixing the compounding consisting of polypropylene resin, or polyethylene resin, non-organic additive, antistatic agent, colorant and others, processing auxiliary by mixer, then subjecting the well-mixed compounding to feeder, extruder and mixing rolls to become gelled, calender-forming said gelled compounding into sheet through calender body, drawing the sheet by guiding rolls, embossing the drawn sheet by embossing device, longitudinally drawing by longitudinal drawing device, lateral drawing by lateral drawing device, cooling the sheet by cooling rolls, surface finishing and drying by surface treatment device winding the sheet into composite paper by winder.

## Description

### Background

### Field of the Invention

This invention relates to methods of manufacturing composite paper, especially by using composite paper manufacture system of bi-axial drawing type or single-axial drawing type consisting of mixer, kneader, feeder, extruder, mixing rolls, calender body, guiding rolls, embossing device, longitudinal drawing device and lateral drawing device (or longitudinal drawing device only for single-axial drawing type), drawn-tempering device, cooling rolls, surface treatment device and winder. First, mixing the compounding consisted of polypropylene resin, or polyethylene resin, non-organic additive, antistatic agent, colorant and other processing auxiliary by mixer, then subjecting the well-mixed compounding to kneader, feeder, extruder and mixing rolls to become gelled, calender-forming said gelled compounding into sheet through calender body, drawing the sheet by guiding rolls, embossing the drawn sheet by embossing device, longitudinally drawing by longitudinal drawing device, lateral drawing by lateral drawing device, tempering the bi-axially drawn sheet by drawn-tempering device, cooling the sheet by cooling rolls, surface treating by surface treatment device, winding the sheet into composite paper by winder.

The composite paper produced having thickness 0.06∼0.8 mm and specific gravity 0.65∼1.15. These composite paper mainly used for taking place of pulp-made paper. Except used for toilet paper, both printing and packaging are available such as books, magazines, posters, calenders, writing papers'...etc.

The compounding in this invention mainly comprises of polypropylene (PP) and/or polyethylene (PE) and natural stone powder(CaCO₃). Besides, adding antistatic agents, lubricants, modifiers, etc., It has a feature that even no white pigment (such as TiO₂) additive still get good opague density (such as used as one-side coated paper with light transmittance value lower than 22%) composite paper.

Also, this can cut down the cost by using mass of low cost material, ie, natural stone powder (CaCO₃).

### Description of the prior art

This invention created due to some factors. The great growth of paper consumption. Traditionally, the materials for paper manufacturing come from natural wood. Consequently, this results in the mass cutting of trees in forest. Besides, it needs many chemical additives during the process of paper manufacture. To dispose and drain away the chemical wastes will cause certain problems for ecological balance and environmental protection in the near future. Furthermore, those problems all result in terrible influence. Because the protection of natural wood resource has become the same objective and the most urgent issue of human kind so that we create this invention. Applicant's company of this invention has experienced 40 years, and become the largest maker of plastics in the world. It takes the advantage of its experience, and have designed the production device for this invention. It faced many problems during the creation, and improved it many times. This accumulates technique from various aspects. So it can successfully takes PP and PE as the primary materials of this invention. To use PP and PE as materials has some merits. First, it is easily available. Second, it is no harm for environmental protection and meet the requiments of food sanitation.

Therefore, We create a composite sheet(paper) with high quality, quantity and utility. This paper can take place of traditional paper manufactured by natural wood-pulp. It owns characteristics in both manufacturing method and facility. As a result, we propose this patent application, and describe as follows:

The concentration of natural stone powder used in this invention can be higher than those of PP or PE. Stone powder made from stone. Consequently, there is no problem for scarcity of materials. As the proportion among PP, PE and stone powder, depends upon which fields the paper used in. For instance, 1000kg PP and 1000kg CaCO₃ with specific gravity 0.91 and 2.7 separately, will have volume 1.1m³ and 0.37m³ respectively. Therefore, a mixture of 1000kg PP and 1000kg CaCO₃ will have 2000kg, 1.47m³ and 1.36. in weight, Volume, and specific gravity, respectively.

This invention emphasizes on how to utilize calender to make the compounding into paper sheet. This composite paper may be manufactured by the compounding (1000 kg PP resin+1000 kg CaCO₃) according to this invention, and it can decrease the specific gravity from 1.36 to 0.75. In other words, through this process the original volume can be extended from 1.47m³ to 2.66m³, 1.81 times of its original volume. This composite paper is very appropriate for replacing the paper produced from pulp. It can be used for writing paper such as books, magazines, posters, calenders, and for packaging paper, etc., This invented paper has ink absorption character by micro-porous structure.

Therefore, it can be printed by solvent base ink, and dry at least 2 times faster than general plastic composite paper. This dry rate almost equal to that of coated paper. In addition, plastics can prevent from worm, cavity and moisture, and be good for long term keeping. That is, both writing and printing are appropriate. Furthermore, traditional paper all need to be bleached and add some white pigment to keep whiteness. However, the composite paper produced by this invented process can be free from the use of TiO₂, because this process will get refraction phenomenon caused by crystalline and porous structure, and produces a vivid jewelry white color. That is another economical feature about this invention.

While the thickness of composite paper is 0.07mm, it's specific gravity can decrease to 0.70. This relation during the manufacturing process of composite paper can change the volume of two material mixture to 2.86m³ after this invented process. While thickness is 0.06 mm, it can increase the drawing ratio to make the specific gravity from 1.36 to 0.65. At the same time, it's volume will increase to be 3.07m³. This is another economical feature significant for being patented. While thickness is in the range between 0.09mm and 0.12mm, it's specific gravity decrease from 1.36 to 0.85, and the volume increase to 2.35m³. For thickness between 0.13mm and 0.8mm, it's specific gravity can be controlled to be below 1.0, except for special use. As to product of thicker composite paper such as name card, it's thickness is generally between 0.15mm and 0.20mm. If consider the needs of market, it could add 5∼10 PHR (Part Per Hundred Resin) TiO₂. Then the specific gravity can also be controlled to be below 1.0.

The composite paper accoding to this invention have features as follows:
For composite paper of thickness 0.08mm, it's specific gravity will be 0.75. That is, to take PP 1000kg and CaCO₃ 1000kg as materials, can make 2.66m³ paper sheet. Besides, CaCO₃ mine is too much to worry about scarcity.

Other than that, for limited resource as PP, 1000kg PP can make 2.66m³ composite paper. If the thickness is 0.08mm, the composite paper production could reach 33,250m² area. For the same size of writing paper, it requires 1,640kg wood pulp which made from 6.89m³ wood. For common forest, it can produce 183m³ wood per hectare. Due to this assumption, 1000kg PP material has the same effect as 0.0377 hectares forest for making paper.

Assume, there has 100,000 tons PP resin used to produce composite paper every year. Then, it can prevent 3,770 hectares forest from being cut down. When the quantity of PP used increase to 1,000,000 tons, it can prevent 37,700 hectares forest from being destroyed. Once the forest is cut down, water and earth preservation will cause problem.

For a certain time, earth and water of forest get lost fast. That means our land get lost too. Therefore, this invention has special contribution regarding creation and preservation of forest. Area of 37,700 hectares forest equals to the area of 19.4km length and 19.4km width each. Further, it takes 15 years for a tree grows up able to be cut. For the comsuming speed presently, the cultivation and growth of forest resource can not keep the needs of human kind. One day, we will run out our forest resource. This deeply influence the balance of human ecological environment. For example, if 15 years old tree can be used for paper making, each year 1,000,000 tons of PP's comsumption for composite paper will equal to the requirement of wood pulp from the cultivation of 565,500 hectares forest. Even increase a forest with a size of length and width 75.2km each. It is almost equal to 5.3 times the area of Hong Kong.

Thus, According to this invention, 1,000,000 tons PP to be used each year, it can save natural wood 6,890,000m³, in other words, can create wood area and improve ecological environment. Our company have more than 40 years experience about plastics processing technique. Especially, we posses more than 100 sets of calenders which rank the first place in the world. Based on such good conditions, we already acquire marvelous achievement in plastic industry. We believe that this invention contribute very much to the earth resource preservation and the protection of ecological evironment. Meanwhile, this is an important milestone in paper making industry, and can be taken as a revolutionary invention in paper-making history.

This invention relates to the manufacturing method of composite paper. Especially, a novel method takes polypropylene as main component and blends with polyethylene, highly concentrated nonorganic additives, etc.,

Then combine kneader, calender with bi-axial drawing device (longitudinal drawing and lateral drawing) to produce composite paper.

### Summary of the Invention

This method makes the composite paper having good properties for printing, water-resistance, non transparency, low specific gravity, antiworm, cavity prevention and anti-moisture. So it can replace the traditional paper and meet the requirements of papers for printing matter and cultural use.

This composite paper can take place of pulp-made paper, and apply in the use of books, magazines, posters, calenders, writing, package, etc.,

Toilet (tissue) paper need to use natual wood pulp as materials. Other than this, composite paper is usable for all printing and packaging purpose. There are significant differences between this invention and composite paper known in the art on the processing and characteristics.

For instance, the primary compositions for composite paper known in the art are PP resin 100 PHR, PP/PE copolymer resin 0∼30 PHR, high/low density PE resin 0∼20 PHR, non-organic filler 0∼35 PHR, antistatic agent 0∼10 PHR, colorant and other additives 0∼15 PHR.

Except using PP resin, PE resin, anti-static agent and other additives, the major feature of this invention is that it can add more non-organic filler i,e. 20∼200 PHR. Besides, it can be averagely and seperately, processed in the processing.

In the composite paper manufacturing method known in the art, compounding is extruded from T-die while adopting single or three layer extrusion machine, it's processing temperature is between 200∼ 250°C, then cooled. Forming through cooling rolls (temp erature 25∼ 40°C). Later, subjecting to longititudinal drawing to be 3∼6 times of the former length at temperature 120∼130°C by bi-axial extension machine. Then tempering and cooling down, subjecting to lateral drawing device at temperature 160∼185°C for lateral drawing 5∼12 times of the former length. Again, tempering and cooling down, or coloring treatment as required. The former stage of composite paper manufacturing method known in the art usally use single layer or three layer extrusion machine.

That is significantly different from this invention using calender. Also, the longititudinal drawing through 25∼40°C cooling rolls first, then reheated to 120∼135°C and longtitudinal drawing again, then tempering and cooling down and again reheated to 160∼185°C to subject to lateral drawing to be 5∼12 times of the former length.

Compare to the composite paper manufacturing method known in the art, this invention keep at 100∼170°C. before subjecting to longititudinal drawing, for 1.1∼6 times longitudinal drawing of former length at temperature 105∼135°C. Furthermore, keeping the same temperature and subject to a lateral drawing device at temperature 140∼ 180°C for 1∼2 times lateral drawing of former length.

So, these are quite different from the composite paper manufacturing method known in the art regarding drawing ratio, temperature and working facilities. Besides, processing method known in the art also adopt calender.

But the above-mentioned method known in the art doesn't posses the bi-axial drawing device. As a result, it can not make composite paper of low specific gravity. On the contrary, the composite paper manufacture system in this invention have special designed bi-axial device. Therefore, the composite paper of low specific gravity can be produced(specific gravity of sheet can be decreased from 1.36 to 0.65∼1.15).

Also, it can produce composite paper having jewelry white color, good opaque density (light transmittance value can be decreased from sheet's 80% to composite paper product's 22%) and lustrous in itself.

The thickness of composite paper manufactured by this invented method can be controlled to be between 0.06 and 0.8mm.

By mass production, composite paper has equal thickness. Furthermore, this method utilize bi-axial drawing device and additives consisting of one or more than one selected from the group consisting of CaCO₃, talc and clay can be added in amount of 20∼200 PHR without foam additives. CaCO₃ as metioned abve can be heavy or light mass of coated or uncated. As a result, it makes the specific gravity decrease from 1.36 of sheet to 0.65∼1.15 of product as required. (specific gravity: of pure PP, 0.91; of CaCO₃, 2.7). Even if white colorant (TiO₂) is not added, it still can make jewelry-white composite paper. Light transmittance value (measured according to ASTM-D-1003) decreases from 80% to 22% below. Also, increasing the opaque density of composite paper, degree of surface gloss (measured according to ASTM-D-523) raised up from 2∼5 to 7∼15. At the same time, increasing the appearance and brightness of printings, and the extra value of product. Thus, this invented composite paper is a revolutionary achievement on plastics processing and paper making technique concerning materials used, boundary conditions set, and the adoption of processing flow facility.

According to first aspect of this invention, there is provided method of manufacturing composite paper comprising, mixing the compounding consisted of polypropylene (PP) resin or polyethylene (PE) resin, non-organic additive, antistatic agent, colorant and other processing auxiliary by mixer of composite paper manufacture system sequentially, then subjecting the well-mixed compounding to feeder, extruder and mixing rolls to become gelled, calender-forming said gelled compounding into sheet through calender body, drawing the sheet by guiding rolls, embossing the drawn sheet by embossing device, longitudinally drawing by longitudinal drawing device, lateral drawing by lateral drawing device, tempering the bi-axially drawn sheet by drawn-tempering device, cooling the sheet by cooling rolls, surface treating by surface finishing and drying, winding the sheet into composite paper by winder.

According to second aspect of this invention, there is provided composite paper manufacture system can be bi-axial drawing type consisting of mixer, kneader, feeder, extruder, mixing rolls, calender body, guiding rolls, embossing device, longitudinal drawing device, lateral drawing device, drawn-tempering device, cooling rolls, surface treatment device and winder, so as to subject drawing either by longitudinal drawing device or by lateral drawing device as required, and using also either embossing device or surface treatment device as required.

According to third aspect of this invention, there is provided composite paper manufacture system can be single axial drawing type consisting of mixer, kneader, feeder, extruder, mixing rolls, calender body, guiding rolls, embossing device, longitudinal drawing device, drawn-tempering device cooling rolls, surface treatment device and winder, so as to subject longitudinal drawing by longitudinal drawing device as required, and using also either embossing device or surface treatment device as required.

The compoment used in the composition in this invention will be described as follows:
(1) The polypropylene (PP) resin used in the compounding comprising one or more than one selected from the group consisting of homopolymer and/or copolymer of MFI (melt flow index) 0.3∼3.0.
(2) The polyethylene (PE) resin used in the compounding comprising one or more than one selected from the group consisting of low density polyethylene (LDPE) resin of MFI 0.3∼4.5, linear low density polyethylene (LLDPE) resin of MFI 0.5∼10 and high density polyethylene (HDPE) resin in amount of 0∼30 PHR so as to adjust the strength and stiffness of the composite paper produced according to this invention.
(3) CaCO₃ is the primary but not the only non-organic additive used in this invention. Sometimes, it can mix with talc, clay, or use alone. Its particle diameter, variety, and quantity will influence the quality of process property and strength. The CaCO₃ used in this invention include coated or uncoated, heavy or light mass, with an average particle diameter 1∼4µm. Its amount is between 20∼200 PHR. After drawing process the orientation of CaCO₃ and resin crystalline will become porous that get a good light transmittance effect. Therefore, the amount of white colorant TiO₂ can be decreased to 0∼10 PHR to cut down the cost. Generally, 0 PHR can get an effect of light transmittance value below 22%. Due to porous structure, the specific gravity of composite paper can decrease from 1.36 to between 0.65∼1.15. Commonly, we control the specific gravity to be between 0.75∼0.95 suitable for the light mass type.
(4) Among the additives used in this invention, the antistatic agent is one or more than one nonionic antistatic agent selected from the group consisting of polyethanol ester, polyethylene glycol ester, polyethylene glycol ether, fatty acid ester, ethanolamide, mono-and di-glyceride and ethoxyized fatty acid amine.

### Brief Description of the Drawings

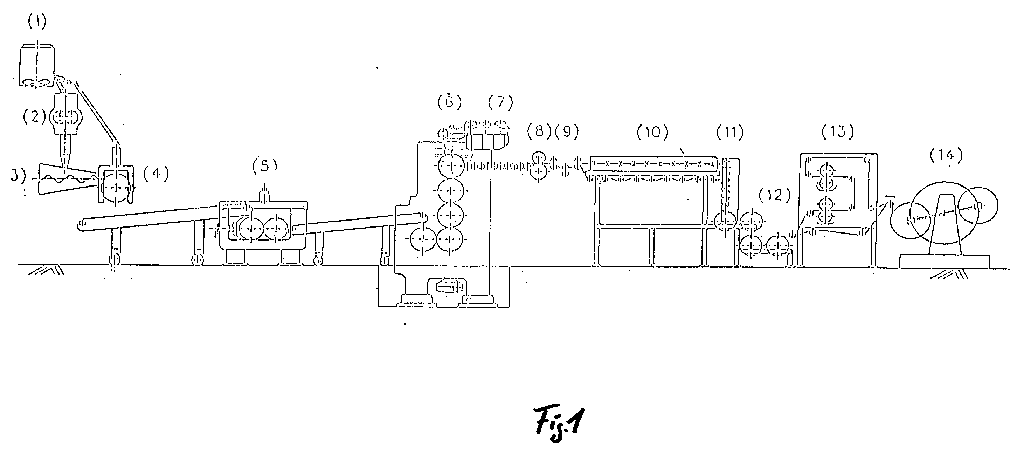

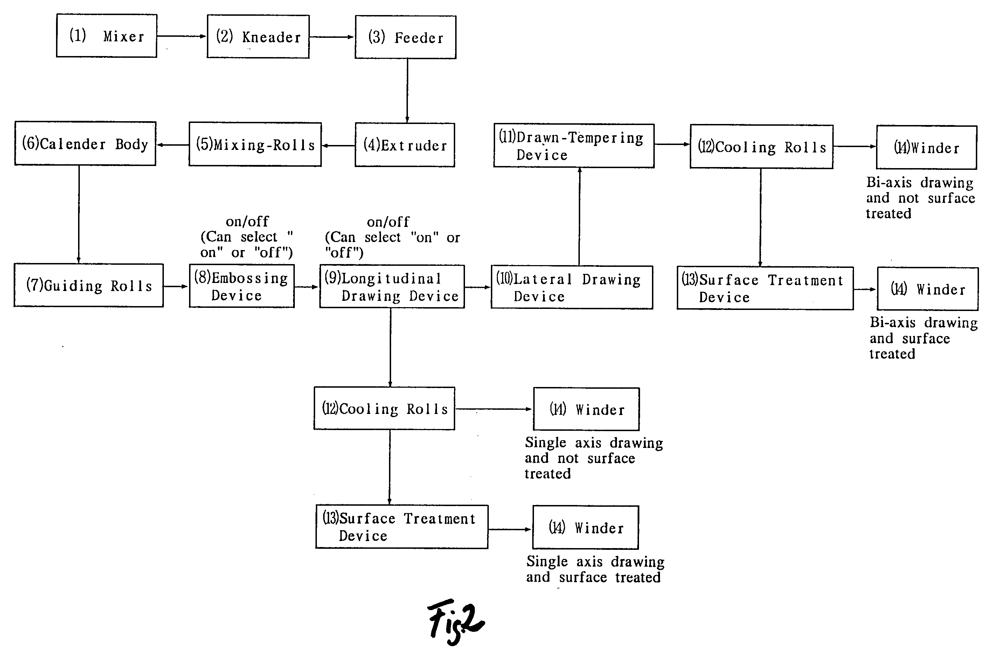

This invention relates to composite paper and its manufacturing method, characterized mainly in the mass production calender which can be assisted with bi-axis drawing facility. Three formats: ①bi-axis drawing, ②single-axis drawing, ③no drawing can be chosen. Besides, two choices for process varieties: ①embossed type, ②Non-embossed type. By using several combination of processes and formats, It only need one well-arranged machine and the product can be varied easily. In order to understand the manufacture process of this invention, detailed description will be shown seperately as follows (refer to Fig.1 and the flowchart in Fig. 2):

The manufacture flowchart (as follows) of this invention suitable for thermoplastics composite paper of PP, PE, PP+PE types. In this flowchart, the[8] pattern emboss device can select "on" or "off" according to whether require pattern or not. Also,[9] longitudinal drawing device can choose "on" or "off" depends on the requirement of extension or not. These processes can be changeable according to product requirements.

In the flowchart above, the Figure number ([1],[2],[3]----[12],[13],[14]) will be described one by one as follows:
- [1] Mixer :: Putting the mixture of resin and other additives into this device, mixing with high speed, cooling and make it be distributed averagely.
- [2] Kneader :: Putting the compounding from [1] to be heated and kneade, and make the compounding be distributed averagely.
- [3] Feeder :: For storing and feeding the kneaded material, and utilize two feeding screws continuing supply to the extruder.
- [4] Extruder :: Depends on compounding property using single screw or twin screw of planetary screws extruder together with high pressure hot water or hot oil or electrical heating to make the material kneaded. Then filtering and extruding into strip for roller.
- [5] Mixing Rolls :: Consisting of two 700 mm⌀ rolls which are filled with high pressure hot water or steam. The surface temperatureis controlled to be at high temperature (between 185∼215°C) to make the compounding be rolled and kneaded again by mixing rolls. After this, the kneading degree will be more steady and average.
- [6] Calender Body :: Putting the mixed and kneaded compounding to be hot rolled by multiple rolls. This promote the compounding to the best kneaded and distributed state, and control the roll gap, speed ratio and drawn ratio of guiding rolls to meet the required thickness. Generally, the number of rolls can be 4, 5 or 6 pieces. The construction of rolls can be L-type, reverse L-type, Z-type or reverse Z-type depends on the distributing plasticization and thickness of compounding. The temperature differs from the plastics resin used. For example, with 5 pieces rolls, L-type and in PP material precessing, the temperature will be set up between 190°C∼ 240°C for the best condition.
- [7] Guiding Rolls :: Consisting of 5∼13 pieces of 80∼200mm⌀ rolls which are filled with warm water or oil. Appropriately adjust the sectional drawn ratio to be approximate 1:1 to 1:6 (to the roll speed ratio of calender body). The temperature of control rolls distribbuted within ±1°C of required value.
- [8] Embossing device :: Consisting of 250∼450mm⌀ steel rolls which filled with warm water or cool water or chilled water. Embossing steel roller is active roll and match with passive rubber roller to make pattern. This device can install wind cutter and cooling water plate to get the suftace texture as like.
- [9] Longitudinal drawing device :: Consisting of diameter 80∼200mm⌀ of 3∼5 rolls and the temperature of the rolls are maintained to be within ±1°C. The first extension is set up to be 1.1∼6 times of original length.
- [10] Lateral drawing device :: This device is to draw the plastic sheet which drawn from the longitudinal drawing device [9] in the lateral direction to the required thickness. At present, the thickness of composite paper can not exceed 80 um. In order to improve this drawback, this device set the drawing ratio to be 1 to 2. The temperature of drawing oven has three seperate control sections, such as 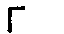 preheating section 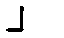 , 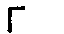 drawing section 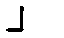 , and 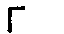 forming section 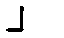 , to be good for drawing homogeneusly and get the required properties. This device is consisted of two set, of lateral extendalbe chain which contain hundreds of clips. The extending ratio is drived by sectional single transmissible screw. The temperature of it is controled within ±2°C as required to keep the composite paper thickness be homogeneous.
- [11] Drawn-tempering device :: Tempering the material from the lateral drawing device [10]. If the thinner composite paper is needed, it can do the second longitudinal drowing here. This device is consisted of 3-10 pieces of 150∼200mm⌀ steel rolls which filled with warm water or hot water or hot oil. The drawn ratio can be 1-3, and produce the smooth press effect. It is available for the second time drawing.
- [12] Cooling rolls :: Consisting of 3∼10 pieces of 110∼600mm⌀ rolls which filled with cool water or chilled water. Make the drawn or nondrawn composite paper (May not through lateral drawing device, and directly from longitudinal drawing device 〈no drawing〉 passing through the 150∼200mm⌀ guiding rolls under machine bed into cooling rolls) set and cooled in this section.
- [13] Surface treatment device :: This device supplied for (A) non-polarized plastics such as PP, PE which have difficulty in printing, (B) removing the overflow non-organic additive which caused by drawing (this powder will influence the printing effect). Thus, this device include surface finishing and drying equipment to make the treatment additives dry completely and distribute homogeneously.
- [14] Winder :: This is a high efficiency central type winder. According to the size of machine bed, it can adjust for kinds of product size and send the product by winding the working section. Between [12] cooling rolls and [13] surface treatment or [14] winder, it may set up an equipment for thickness inspection (such as β-ray-thickness measurement), corona treatment or pinhole detector (and checkout the unqualified) .... etc.
This invention is characterized in that it can satisfy different requirments of composite paper (Such as different pattern, printability, hot stamp liability, rigidness, decreasing rate of specific gravity, etc.) by variet ies of bination in the same machine set. Consequently, this can save money and space for another machine bed. At the same time, it can do mass production for the composite paper with homogeneous thickness, and therefore improve the production, efficiency, and down the cost.
In order to understand this invention further, we provide the embodiment (specific gravity 0.65∼1.00) to descibe which product will be suitable for this invention. But this is not used for limitting the scope of this invention. For example, this invention is also fit for products with specific gravity 1.36 (frontcover of wrapper-file). However, based on the consideration of mass production, it will not written in the embodiments.

### 〈 Example 1 〉 apply for the composite paper with thickness 0.06mm, specific gravity 0.65

1. Put PP (MFI=0.5) 100 PHR, linear low density PE (MFI=10) 30 PHR, CaCO₃ 100 PHR, anti-static agent additive (Nippon Rikken S-100 GMS) 8 PHR, and fatty acid ester lubricant (ester wax of Henkel) 1 PHR, into mixer [1] for mixing. Then pour into kneader [2] which set up temperature 200°C to make the compounding gelled and homogenized. Through feeder [3] to extruder to become gelled strips. After mixed by mixing rolls (5) (temp 195°C), sending to calender [6] which is set up between 210∼240°C. The speed of fifth roll is set up at 25M/min. The drawn ratio between guiding rolls [7] and calender's [6] fifth roll is 1.4:1. Temperature of guiding rolls is set up between 120∼160°C. Then through embossing device [8] and drawing to be five times of former length by longitudinal drawing device [9] having temperature 130°C. Then enter the lateral drawing device to be drawn 2 times of former length at temperature 150∼ 170°C. After this process, it goes to drawn-tempering device [11] process. Setting at temperature 130∼160°C and subjected to tempering and setting treatment. Again, it drawn to be 1.2 times of former stage. Then cooling through cooling rolls [12] and thickness measurement, corona treatment and pinhole detect. Finally, it will be transferred to surface treatment device [13] for surface finishing, and the composite paper with thickness 0.06mm and specific gravity 0.65 can be taken off by winder [14].
2. As mentioned above, the composite paper will have low specific gravity and can take place of traditional woodfree paper and drawing paper which made from natural wood pulp. Their physical properties of the composite paper are as follows:

| Thickness | Specific Gravity | Tensile strength psi | Elongation % | Thermo-deformation °C | Degree of Gloss 60° | Light Transmittane % | Whiteness |
|---|---|---|---|---|---|---|---|
| 0.06mm | 0.65 | MD:14200 | MD:60 | 69 | 9-12 | 18.0 | 91.2 |
| ±10% | | CD:1900 | CD:130 | | | | |
| Testing | ASTM | ASTM | ASTM | ASTM | ASTM | ASTM | ASTM |
| Method | D-1238 | D-638 | D-638 | D-648 | D-523 | D-1003 | E-313 |

### 〈 Example 2 〉 apply for composite paper with thickness 0.08mm and specific gravity

1. Put PP (MFI=0.5) 100 PHR, linear low density PE (MFI:10) 20 PHR, CaCO3 100PHR, anti-static agent (Nippon Rikken S-100GM) 8 PHR, and fatty acid ester lubricant (ester wax of Henkel) 1 PHR into mixer [1] for mixing. Then pour into kneader [2] temperature 200°C to make the compounding equally gelled, and feed through feeder [3] to extruder [4] to become gelled strip. After Mixed by mixing rolls [5] (temperoture 190°C), this compounding will be sent to calender (temperature 210∼240°C). The fifth roll speed of calender is set up at 25M/min. The drawn ratio between guiding rolls [7] and the fifth roll of calender [6] is 1.3. Guiding roll's temperature is set up between 120∼160°C. Then process through embossing device [8] and longitudinal drawing device [9] (temperature 130°C) to become 4.5 times of original length by drawing. Then go to lateral drawing device [10] (temperature 150∼170°C) to be drawn 1.7 times of former length. After this, it is processed by drawn-tempering device [11] (temperature 130°C∼160°C) to tempering and setting. No drawing here. Then cooled through cooling rolls [12] and subjected to thickness measurement, corona treatment, and pinhole detection. At last, transfer to surface treatment device [13] for surface finishing, then, picking up the composite paper of thickness 0.08mm and specific gravity 0.75 by winder [14].
2. As mentioned above, the composite paper will have low specific gravity and can take place of traditional woodfree paper and drawing paper which made from natural pulp. The physical properties of the composite paper are as follows:

| Thickness | Specific Gravity | Tensile strength psi | Elongation % | Thermo-deformation °C | Degree of Gloss 60° | Light Transmittane % | Whiteness |
|---|---|---|---|---|---|---|---|
| 0.08mm | 0.75 | MD:13000 | MD:55 | 69 | 9-12 | 17.0 | 91.0 |
| ±10% | | CD:1800 | CD:120 | | | | |
| Testing | ASTM | ASTM | ASTM | ASTM | ASTM | ASTM | ASTM |
| Method | D-1238 | D-638 | D-638 | D-648 | D-523 | D-1003 | E-313 |

### 〈 Example 3 〉 apply to composite paper having thickness 0.12mm and specific gravity 0.85.

1. Put PP (MFI=1.0) 100 PHR, PE (MFI:10) 30 PHR, CaCO₃ 100 PHR, amtistatic agent (Nippon Rikken, S-100 GMS) 10 PHR, and fatty acid ester lubricant (ester wax of Henkel) 1 PHR into mixer [1] for mixing. Then pour into kneader [2] (temperature 195°C) to make the compounding equally kneaded, and feed through feeder [3] to extruder [4] to become kneaded strip. After mixed by mixing rolls [5] (temperature 190°C), this compounding will be transferred to calender [6] (temp. 210∼235°C). The fifth roll speed of calender is set up at 18m/min. The drawn ratio between guiding roll [7] and the fifth roll of calender [6] is 1.2. Guiding roll's temperature is set up between 110∼150°C. Then process through embossing device [8] and longitudinal drawing device [9] (temperature 120°C) to become 4.2 times of original length by drawing. Then transferred to lateral drawing device [10] (temp 150∼170°C) to be drawn to 1.4 times of former length. After this, it was processed by drawn-tempering device [11] (temperature 130∼160°C) and subjected to tempering and setting. No drawing here. Then cooled through cooling rolls[12] and subjected to thickness measurement, corona treatment, and pinhole detection. At last, transfer to surface treatment device [13] for surface finishing, then, picking up the composite paper of thickness 0.12mm and specific gravity 0.85 by winder [14].
2. As mentioned above, the composite paper will have low specific gravity and take place of traditional woodfree paper and drawing paper which made from natural pulp. The physical properties of the composite paper are as follows:

| Thickness | Specific Gravity | Tensile strength psi | Elongation % | Thermo-deformation °C | Degree of Gloss 60° | Light Transmittane % | Whiteness |
|---|---|---|---|---|---|---|---|
| 0.12mm | 0.85 | MD:10000 | MD:40 | 69 | 8-10 | 22.0 | 88.0 |
| ±10% | | CD:1400 | CD:80 | | | | |
| Testing | ASTM | ASTM | ASTM | ASTM | ASTM | ASTM | ASTM |
| Method | D-1238 | D-638 | D-638 | D-648 | D-523 | D-1003 | E-313 |

### 〈 Example 4 〉 apply to composite paper having thickness 0.15mm and specific gravity 1.0.

1. Put pp (MFI=1.0) 100 PHR, high density PE (MFI=4) 40 PHR, CaCO₃ 100 PHR, anti static agent (Nippon Rikken S-100 GMS) 10 PHR, fatty acid ester lubricant (ester wax of Henkel) 1.2 PHR, and white colorant TiO₂ 10 PHR into mixer [1] for mixing. Then pour into kneader [2] (temperature 190°C) to make the compounding equally gelled, and feed through feeder [3] to extruder [4] to become gelled strip. After mixed by mixing roller [5] (temperature 185°C), this compounding will be transferred to calender [6] (temperature 210∼230°C). The fifth roll's speed of calender is set up at 17M/min. The drawn ratio between guiding rolls [7] and the fifth roll of calender is 1.1. Guiding roll's temperature is set up between 120∼160°C. Then process through embossing device [8] and longitudinal drawing device [9] (temperature 110°C) to become 4 times of original length by drawing. Then transferred to lateral drawing device [10] (temperature 140∼160°C) to be drawn to 1.1 times of former length. After this, it was processed by drawn-tempering device [11] (temperature 110∼140°C) and subjected to tempering and setting. No drawing here. Then cooled through cooling rolls [12] and subjected to thickness measurement, corona treatment, and pinhole detection. Lastly, picking up the composite paper of thickness 0.15mm and specific gravity 1.0 by winder [14].
2. As mentioned above, the composite paper will have low specific gravity and can take place of traditional woodfree paper and drawing paper which made from natural pulp. The physical properties of the composite paper are as follows:

| Thickness | Specific Gravity | Tensile strength psi | Elongation % | Thermo-deformation °C | Degree of Gloss 60° | Light Transmittane % | Whiteness |
|---|---|---|---|---|---|---|---|
| 0.15mm | 1.0 | MD:8000 | MD:40 | 71 | 14-15 | 14.0 | 91.0 |
| ±10% | | CD:2100 | CD:106 | | | | |
| Testing | ASTM | ASTM | ASTM | ASTM | ASTM | ASTM | ASTM |
| Method | D-1238 | D-638 | D-638 | D-648 | D-523 | D-1003 | E-313 |

## Claims

1. A method of manufacturing composite paper, comprising: mixing the compounding consisted of polypropylene (PP) resin or polyethylene (PE) resin, non-organic additive, antistatic agent, colorant and other processing auxiliary by mixer of composite paper manufacture system sequentially, then subjecting the well mixed compounding to feeder, extruder and mixing rolls to become gelled, calender-forming said gelled compounding into sheet through calender body, drawing the sheet by guiding rolls, embossing the drawn sheet by embossing device, longitudinally drawing by longitudinal drawing device, lateral drawing by lateral drawing device, tempering the bi-axially drawn sheet by drawn-tempering device, cooling the sheet by cooling rolls, surface treating by surface finishing and drying, winding the sheet into composite paper by winder.

2. A method of manufacturing composite paper as claimed in claim 1, wherein said composite paper manufacture system can be of bi-axial drawing type consisting of mixer, kneader, feeder, extruder, mixing rolls, calender body, guiding rolls, embossing device, longitudinal drawing device, lateral drawing device, drawn-tempering device, cooling rolls, surface treatment device and winder, so as to subject drawing either by longitudinal drawing device or by lateral drawing device as required, and using also either embossing device or surface treatment device as required.

3. A method of manufacfuring composite paper as claimed in claim 1, wherein said composite paper manufacture system can be of single axial drawing type consisting of mixer, kneader, feeder, extruder, mixing rolls, calender body, guiding rolls, embossing device, longitudinal drawing device, drawn-tempering device, cooling rolls, surface treatment device and winder, so as to subject longitudinal drawing by longitudinal drawing device as required, and using also either embossing device or surface treatment device as required.

4. A method of manufacturing composite paper as claimed in claim 1, wherein said compounding is consisted of polypropylene (PP) 100 PHR (part hundred resin), high density polyethylene (HDPE) resin 0∼70 PHR, low density polyethylene (LDPE) resin or linear low density polyethylene (LLDPE) resin 0-30 PHR, non-organic filler 20∼200 PHR, antistatic agent 0-10 PHR, and white colorant TiO₂ 0-10 PHR.

5. A method of manufacturing composite paper as claimed in claim 4, wherein said polypropylene resin in said compounding comprising one or more than one selected from the group consisting of homopolymer and/or copolymer of MFI (melt flow index) 0.3∼3.0.

6. A method of manufacturing composite paper as claimed in claim 4, wherein said polyethylene resin in said compounding comprising one of more than one selected from the group consisting of low density polyethylene (LDPE) resin of MFI 0.3∼4.5, linear low density polyethylene (LLDPE) resin of MFI 0.5∼10 and high density polyethylene (HDPE) resin.

7. A method of manufacturing composite paper as claimed in claim 1, wherein the non-organic filler in said compounding is one or more than one selected from the group consisting of coated or uncoated heavy-mass or light-mass calcium carbonate (CaCO₃), talc and clay; wherein the average diameter of CaCO₃ is 1∼4µm, while the talc is 5∼12µm.

8. A method of manufacturing composite paper as claimed in claim 1, wherein the antistatic agent in said compounding is one or more than one nonionic antistatic agent selected from the group consisting of polyethanol ester, polyethylene glycol ether, fatty acid ester, ethanolamide, mono and di-glyceride and ethoxyized fatty acid amine.

9. A method of mantafacturing composite paper as claimed in claim 1, wherein the drawing ratio of longitudinal drawing device and lateral drawing device respectively range from 1.1∼6 and 1∼2, while the second sectional longitudinal drawing may further be drawn by drawn-tempering device with ratio range from 1∼3 if required.

10. A method of manufacturing composite paper as claimed in claim 1, wherein the composite paper wound have thickness of 0.06∼0.80mm and specific gravity of 0.65∼1.15.

11. A method of manufacturing composite paper as claimed in claim 10, wherein the composite paper have specific gravity being range from 0.75 to 0.95 suitable for light mass.

12. A product of any preceding claim.
